# EUROPEAN PATENT SPECIFICATION

(11) **EP 2 578 531 B1**
(45) Date of publication and mention of the grant of the patent: **20.11.2019**
(21) Application number: 11786307.6
(22) Date of filing: 20.05.2011
(51) Int. Cl.: C01B 3/38, H01M 8/04, H01M 8/06

(54) **METHOD FOR OPERATING A HYDROGEN GENERATOR**
BETRIEBSVERFAHREN EINES WASSERSTOFFGENERATORS
MÉTHODE D'UTILISATION D'UN GÉNÉRATEUR D'HYROGÈNE

(30) Priority: 28.05.2010 JP 2010122827
(43) Date of publication of application: 10.04.2013
(73) Proprietor: Panasonic Intellectual Property Management Co., Ltd., Osaka-shi, Osaka 540-6207 (JP)
(72) Inventor: KANI, Yukimune, Chuo-ku Osaka 540-6207 (JP); UKAI, Kunihiro, Chuo-ku Osaka 540-6207 (JP); KANEKO, Hiroaki, Chuo-ku Osaka 540-6207 (JP)
(74) Representative: Grünecker Patent- und Rechtsanwälte PartG mbB
(86) International application number: PCT/JP2011/002828
(87) International publication number: WO 2011/148604

(56) References cited:
- EP-A1- 2 138 456
- WO-A1-2009/090718
- JP-A- 2004 307 236
- JP-A- 2005 243 330
- JP-A- 2008 266 118
- US-A1- 2002 071 975
- US-A1- 2005 129 997
- US-A1- 2010 068 573

## Description

### Technical Field

The present invention relates to a method of operating a hydrogen generator. More particularly, the invention relates to prevention of degradation in the reforming catalyst during shut-down operation of the hydrogen generator.

### Background Art

US 2010/068573 A1 relates to a hydrogen generator and a fuel cell system. Fuel cells, which are compact in size and capable of performing high-efficiency power generation, are being developed as power generation systems for distributed energy resources. However, hydrogen gas, which is a fuel necessary for the power generation of such systems, is not supplied from existing infrastructure. To cope with this situation, those power generation systems are provided with a hydrogen generator for generating hydrogen-containing gas from a raw material supplied from an existing infrastructure such as city gas pipelines, propane gas or the like.

Such a hydrogen generator includes a steam reforming unit for causing a reforming reaction between steam and the raw material at a temperature ranging from 600 to 700°C by use of a Ru catalyst or Ni catalyst. The hydrogen generator further includes a shift converting unit for reducing carbon monoxide by promoting a shifting reaction between steam and the carbon monoxide contained in the hydrogen-containing gas at a temperature of from 200 to 350°C, using a Cu-Zn catalyst or a precious metal catalyst. Further, the hydrogen generator is equipped with an oxidation reaction unit which causes the oxidation reaction of carbon monoxide at a temperature of from 100 to 200°C by use of a Ru catalyst or a Pt catalyst in order to reduce carbon monoxide or a methanation reaction unit which causes a methanation reaction for carbon monoxide reduction.

In cases where such a power generation system is used in a home, the operation, in which the start-up and shut-down of the power generation system are performed depending upon the electric load of the home, is regarded as a high-efficiency power generating operation, and therefore, it is necessary to start up and shut down the hydrogen generator in accordance with the operation status of the power generation system. It should be noted however that when shutting down the hydrogen generator, decrease in temperature of the hydrogen generator and the steam condensation cause a negative pressure condition within the hydrogen generator, so that air is likely to flow into the hydrogen generator from outside. At that time, the catalyst of each reaction unit might be subjected to contact with air and to oxidization, resulting in deterioration in catalytic properties.

With the intention of overcoming this problem, a technique has been proposed according which such air penetration into the hydrogen generator is prevented by stopping the supplying of steam to the reforming reaction unit and starting to supply the raw material, upon determining that the temperature of the reforming reaction unit becomes lower than or equal to a specified value (see Patent Literature 1). Another proposal is such that the air penetration is prevented by stopping the heating operation, stopping the supplying of water by gradually reducing the supply amount of water, and stopping the supplying of the fuel (raw material) (see Patent Literature 2).

### Citation List

### Patent Literature

Patent Literature 1: JP-A-2005-243330
Patent Literature 2: JP-A-2007-254251

### Summary of Invention

### Technical Problem

In the hydrogen generator disclosed in each of the patent literatures 1 and 2 listed above, the reforming reaction unit is disconnected from the atmosphere and sealed, after stopping the supplying of the material and the supplying of water. At that time, the inner pressure rises owing to steam generated from the residual water heated by the residual heat of the hydrogen generator. To cope with this, the hydrogen generator executes depressurization by opening the reforming reaction unit to the atmosphere. During the phase of the depressurization, the gas remaining within the reforming reaction unit is pushed out of the reforming reaction unit by the steam so that the inside of the reforming reaction unit is likely to have a highly-concentrated steam atmosphere. If the reforming reaction unit comes to have a steam atmosphere at high temperatures in the above condition, the reforming catalyst housed in the reforming reaction unit becomes subjected to oxidization degradation in many cases. Such a problem is not unique to the above depressurization case. Even where the reforming reaction unit is kept to be opened to the atmosphere after stopping the supplying of the raw material and the supplying of water, a steam atmosphere is sometimes established in the reforming reaction unit as the residual water evaporates, so that the same problem occurs. Also, the same problem occurs in the so-called open system hydrogen generators that are not equipped with a sealing device for providing discommunication between the reformer and the atmosphere. The same problem is also seen in hydrogen generators which have a sealing device but are designed to keep the sealing device open after stopping the supplying of the raw material and the supplying of water.

The present invention is directed to overcoming the foregoing problem and a primary object of the invention is therefore to provide a hydrogen generator and a method of operation thereof which hydrogen generator is configured to reduce the possibility of steam oxidation in the reforming catalyst to a higher extent than the conventional hydrogen generators.

### Solution to Problem

According to the invention, the above object can be accomplished by a method of operating a hydrogen generator as defined in claim 1. Further advantageous embodiments are defined in dependent claims.

These objects as well as other objects, features and advantages of the invention will become apparent to those skilled in the art from the following detailed description of preferred embodiments with reference to the accompanying drawings.

### Advantageous Effects of Invention

The invention is configured as described earlier and has the effect of reducing the possibility of steam oxidation in the reforming catalyst of the hydrogen generator.

### Brief Description of Drawings

Fig. 1 is a block diagram showing the configuration of a hydrogen generator.
Fig. 2 is a flow chart showing a shut-down operation of the hydrogen generator shown in Fig. 1.
Fig. 3 is a block diagram showing the configuration of a hydrogen generator.
Fig. 4 is a flow chart showing a shut-down operation of the hydrogen generator shown in Fig. 3.
Fig. 5 is a flow chart showing the contents of the depressurization process and the material gas supplying process shown in the flow chart of Fig. 4.
Fig. 6 is a flow chart showing the contents of a depressurization process and a material gas supplying process during shut-down of a hydrogen generator according to a third embodiment.
Fig. 7 is a flow chart showing the contents of a depressurization process and a material gas supplying process during shut-down of a hydrogen generator according to a fourth embodiment.
Fig. 8 is a flow chart showing a shut-down operation of a hydrogen generator according to a fifth embodiment.
Fig. 9 is a flow chart showing a shut-down operation of a hydrogen generator according to a sixth embodiment.
Fig. 10 is a block diagram showing the configuration of a hydrogen generator.
Fig. 11 is a block diagram showing the configuration of a fuel cell system.
Fig. 12 is a longitudinal sectional view showing the configuration of a hydrogen generating device according to one example, which hydrogen generating device is applicable to the embodiments of the invention.

### Description of Embodiments

Referring now to the accompanying drawings, the embodiments of the invention will be described. In all the figures referred to in the following description, those parts that are substantially equivalent or function substantially similarly to one another are indicated by the same reference numerals to avoid unnecessary repetition of description.

### (First Embodiment)

A hydrogen generator comprises a reformer which includes a reforming catalyst and generates hydrogen-containing gas by a reforming reaction using a material gas and steam; a material gas supply device which regulates an amount of the material gas to be supplied to the reformer; an evaporator which generates the steam and supplies the steam to the reformer; a water supply device which regulates an amount of water to be supplied to the evaporator; and a controller configured to control the material gas supply device and the water supply device to stop supplying of the material gas to the reformer and supplying of the water to the evaporator and then control the material gas supply device to supply the material gas to the reformer in a period during which residual water evaporates in at least one of the evaporator and the reformer. The material gas supply device stated herein includes an on-off valve that is located in a material gas supplying passage as described later.

According to this configuration, the vapor concentration of the reformer attributable to the residual water can be made lower than those of the conventional hydrogen generators by supplying the raw material to the reformer in a period during which residual water evaporates and, in consequence, the steam oxidation of the reforming catalyst can be suppressed as compared to the conventional hydrogen generators.

The hydrogen generator further comprises a combustor for combusting gas sent out from the reformer to heat the reformer, and wherein the controller is configured to control the material gas supply device to supply the material gas to the reformer after the gas sent out from the reformer to the combustor becomes incombustible after stopping the supplying of the material gas to the reformer and the supplying of water to the evaporator.

It should be noted "the state in which the gas is incombustible" stated herein includes at least either "the state in which the gas is incombustible because of its composition" or "the state in which the gas is incombustible because of the supply amount of the gas". "The state in which the gas is incombustible because of its composition" corresponds to, for instance, the case where the gas becomes incombustible because its combustible gas concentration decreases as its steam concentration increases. "The state in which the gas is incombustible because of the supply amount of the gas" corresponds to, for instance, the case where the gas becomes incombustible because the supply amount of the gas decreases as the evaporation amount of the residual water decreases, even though the composition of the gas is good enough to keep the gas combustible.

In this configuration, the gas, which is sent out of the reformer by the evaporation of the residual water and flows into the combustor, is combustible during the initial phase of the stop of the supplying of the material gas and the supplying of water, but the gas flowing into the combustor eventually becomes incombustible as described earlier. However, the evaporation of the residual water continues after the gas flowing into the combustor becomes incombustible. In this condition, the material gas is supplied to the reformer, which enables it to suppress the steam oxidation of the reforming catalyst.

The controller may be configured to control a supply amount of the material gas so as not to cause coking in the material gas within the reformer, when the material gas is supplied, at least in a state in which the reformer is at a temperature that causes the coking in the material.

This configuration enables it to suppress the coking within the reformer even if the material gas is supplied to the reformer at such high temperatures that cause the coking in the raw material.

The controller may be configured to supply the material gas at least in a state in which the reformer is at a temperature that causes the steam oxidation of the reforming catalyst.

This configuration enables it to suppress the steam oxidation of the reforming catalyst.

A method of operating the hydrogen generator according to the first embodiment comprises the steps of: (a) generating, in a reformer, hydrogen-containing gas by a reforming reaction using a material gas and steam generated in an evaporator; (b) stopping supplying of the material gas to the reformer by a material gas supply device and supplying of water to the evaporator by a water supply device; and (c) supplying the material gas to the reformer by the material gas supply device in a period during evaporation of residual water in one of the evaporator and the reformer, after the supplying of the material gas to the reformer and the supplying of water to the evaporator are stopped.

This method enables it to suppress the steam oxidation of the reforming catalyst to a higher extent than the conventional hydrogen generator operation methods.

The method of the first embodiment further comprises (d) heating the reformer by combusting in a combustor gas sent out from the reformer, when generating the hydrogen-containing gas in the reformer, and wherein the step (c) includes (c1) executing supplying of the material gas to the reformer by the material gas supply device after the gas sent out from the reformer to the combustor becomes incombustible after the supplying of the material gas to the reformer and the supplying of water to the evaporator are stopped.

This configuration enables it to suppress the steam oxidation of the reforming catalyst in a situation in which the evaporation of the residual water continues after the gas flowing into the combustor becomes incombustible.

In the step (c) of the first embodiment, at least the supplying of the material gas is performed at a temperature which cause steam oxidation of the reforming catalyst.

This enables it to suppress the steam oxidation of the reforming catalyst.

The first embodiment is associated with one form in which the steam oxidation of the reforming catalyst is suppressed in a so-called open system hydrogen generator that does not include a sealing device for providing discommunication between the reformer and the atmosphere.

### (Configuration of Hydrogen Generator)

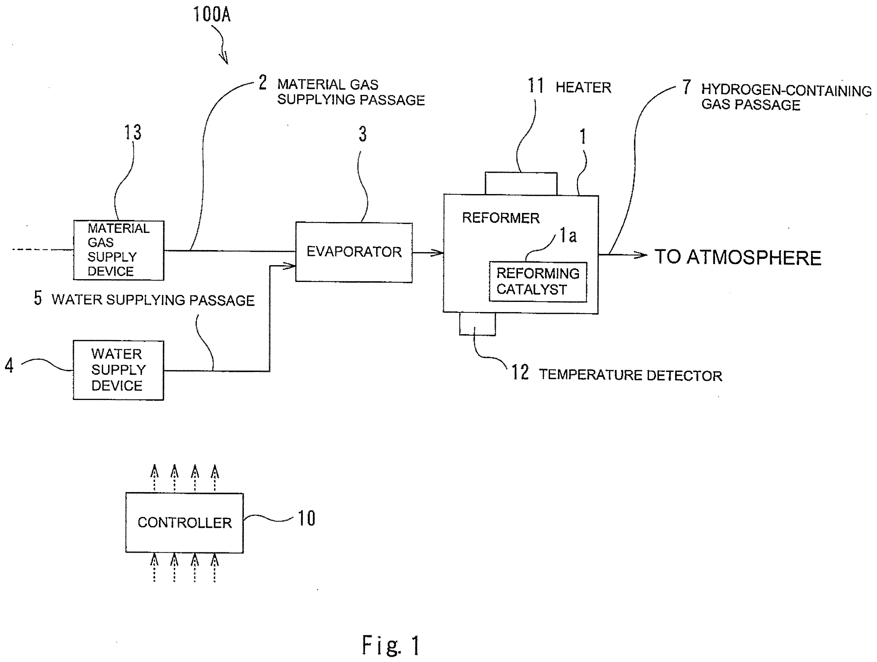

Fig. 1 is a block diagram showing the configuration of the hydrogen generator. First, the configuration of the hardware will be described.

As illustrated in Fig. 1, a hydrogen generator 100A associated with this embodiment has, as main constituent elements, a reformer 1, a material gas supplying passage 2, an evaporator 3, a first sealing device (not shown), a water supplying passage 5, a second sealing device (not shown), a hydrogen-containing gas passage 7, a controller 10, a heater 11 and a temperature detector 12.

As exemplified by the example described later, the reformer 1 is composed of a gas flow passage formed in a reactor vessel and a reforming catalyst 1a disposed in this gas flow passage. The hydrogen-containing gas passage 7 corresponds to a passage in which the gas flowing from the outlet of the reformer 1 flows. A known catalyst may be used as the reforming catalyst 1a. In this embodiment, a Ni catalyst, for instance, is used as the reforming catalyst 1a. The reformer 1 is designed to be heated by the heater 11. The reformer 1 (and, in consequence, the reforming catalyst 1a) is heated to high temperatures ranging from e.g., 600 to 700°C by the heater 11. The heater 11 consists of, for example, a combustor. Therefore, the reformer 1 generates hydrogen-containing gas by a reforming reaction that occurs between the material gas and steam under the influence of the reforming catalyst 1a.

The material gas supplying passage 2 is connected, at its upstream end, to a material gas source through a material gas supply device 13 and connected, at its downstream end, to the inlet (material gas supplying port) of the reformer 1. Any gases may be employed as the material gas as long as they can react with steam to cause a reforming reaction under the influence of a reforming catalyst, thereby generating hydrogen-containing gas. Typical examples of the material gas include material gases containing organic compounds (such as hydrocarbon) composed of at least carbon and hydrogen. For instance, natural gas, LPG (liquefied petroleum gas), DME (Dimethyl ether) and others may be used. Representative examples of the material gas source include a material gas infrastructure having higher supply pressure than atmospheric pressure and a compressed material gas cylinder. The material gas supply device 13 is required to have the function of supplying the material gas to the reformer 1. The representative examples of the material gas supply device 13 include a booster capable of controlling the flow rate of the material gas and provided in the material gas supplying passage 2; a flow rate control valve; and an on-off valve provided in the material gas supplying passage 2.

The evaporator 3 is configured to be supplied with the water flowing in the water supplying passage 5. For instance, the evaporator 3 is located in the material gas supplying passage 2 and the water supplying passage 5. Specifically, the material gas supplying passage 2 and the water supplying passage 5 join together at the evaporator 3. The evaporator 3 is configured to evaporate the water supplied from the water supplying passage 5 by heating to thereby generate steam which is in turn supplied to the reformer 1. For instance, the evaporator 3 is configured to generate steam as explained in the example to be described later, by heating the water with the heater 11 that is used for heating the reformer 1. The evaporator 3 is not limited to the configuration described just above and, obviously, other configurations may be employed. One example of alternative configurations is such that the downstream end of the water supplying passage 5 is connected to the evaporator 3 so that the material gas supplying passage 2 does not pass through the evaporator 3 and the steam generated by the evaporator 3 is allowed to flow into the material gas supplying passage 2.

The water supplying passage 5 is connected, at its upstream end, to a water supply device 4 having the function of controlling the amount of water and connected directly or indirectly, at its downstream end, to the evaporator 3. As the water supply device 4, water supply pump or the like connected to a water source is applicable. This enables it to supply water to the evaporator 3 through the water supplying passage 5.

The hydrogen-containing gas passage 7 is connected, at its upstream end, to the outlet of the reformer 1 and opened to the atmosphere at its downstream end. Generally, a device (not shown) which uses hydrogen (e.g., a fuel cell and a hydrogen storage) is provided at a position along the hydrogen-containing gas passage 7. In one form, the hydrogen-containing gas passage 7 is connected to the combustor that serves as the heater 11.

The first sealing device (now shown) is provided in the material gas supplying passage 2. The first sealing device is configured to be opened and closed thereby allow and stop of the flow of a fluid in the material gas supplying passage 2. A second sealing device (not shown) may be provided in a water supplying passage 6. The second sealing device is configured to be opened and closed to allow and stop the flow of a fluid in the water supplying passage 6. The first and second sealing devices consist of, for example, an on-off valve (electric-operated valve), a flow regulating valve or a pump including a mechanism for effecting sealing at the time of shut-down. In cases where the first sealing device consists of a flow regulating valve or pump, the material gas supply device 13 may play the role of the first sealing device as well.

Next, the configuration of the control system will be described. The reformer 1 is provided with the temperature detector 12. The temperature detector 12 is configured to detect the temperature of the reformer 1 to output to the controller 10. The temperature detector 12 is constituted by, for example, a temperature sensor such as a thermocouple and a thermistor.

As described later, the controller 10 is configured to perform supplying of the material gas after stopping supplying of the material gas and supplying of water. More concretely, the controller 10 has an arithmetic operation unit (not shown) and a storage unit (not shown). For example, the arithmetic operation unit consists of a microprocessor, CPU or the like whereas the storage unit consists of an internal memory. The storage unit stores a control program and the arithmetic operation unit reads out this control program to execute a specified control operation. It should be noted the controller may be composed of a single controller for performing central control or, alternatively, a plurality of controllers that work in corporation with one another to perform distributed control.

### (Operation of Hydrogen Generator)

Next, the operation of the hydrogen generator 100A (the method of operating the hydrogen generator 100A) will be described. The operation of the hydrogen generator 100A is executed by the control of the controller 10. First, the general operation will be briefly explained.

During the hydrogen generation operation of the hydrogen generator 100A, the first sealing device and the second sealing device are opened whereas the material gas supplying passage 2, the water supplying passage 5 and the hydrogen-containing gas passage 7 are respectively in a fluid communication state. In this condition, the material gas flows in the material gas supplying passage 2 whereas water flows in the water supplying passage 5. Of the material gas and the water, the water is evaporated to produce steam in the evaporator 3. Then, the steam is mixed with the material gas preheated by the evaporator 3, producing a mixed gas which is, in turn, supplied to the inlet of the reformer 1. The reformer 1 is heated to a predetermined temperature by the heater 11. In the reformer 1, a reforming reaction is caused between the steam and the material gas under the catalytic influence of the reforming catalyst 1a, thereby producing hydrogen-containing gas. The hydrogen-containing gas thus generated flows into the hydrogen-containing gas passage 7 from the outlet of the reformer 1 and is then utilized by the device that uses hydrogen so that the composition of the hydrogen-containing gas varies depending on its usage pattern. The gas, which has changed in its composition, is released to the atmosphere from the downstream end of the hydrogen-containing gas passage 7.

Next, the performance that characterizes the hydrogen generator of this embodiment will be described.

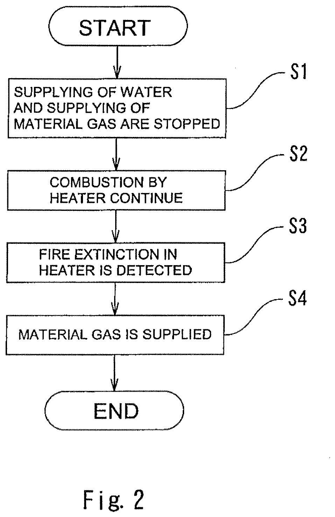

Fig. 2 is a flow chart showing the shut-down operation of the hydrogen generator shown in Fig. 1.

As shown in Fig. 2, during shut-down of the hydrogen generator 100A, the controller 10 controls the water supply device to stop the supplying of water (step S1). The controller 10 may close the second sealing device in response to the stop of the supplying of water.

The controller 10 controls the material gas supply device 13 to stop the supplying of the material gas (step 1). The controller 10 closes the first sealing device, following the stop of the supplying of the material gas.

In this condition, the gas remains in the reformer 1 as well as in the area of the hydrogen-containing gas passage 7, this area extending from the reformer 1 to the heater 11. Water remains within the evaporator 3. The residual gas is composed essentially of the hydrogen-containing gas which has been produced, the material gas and steam. The water remaining in the evaporator 3 is evaporated by the residual heat for a while after the stop of the supplying of the material gas and the supplying of water. This water evaporation causes the residual gas to be supplied to the heater 11.

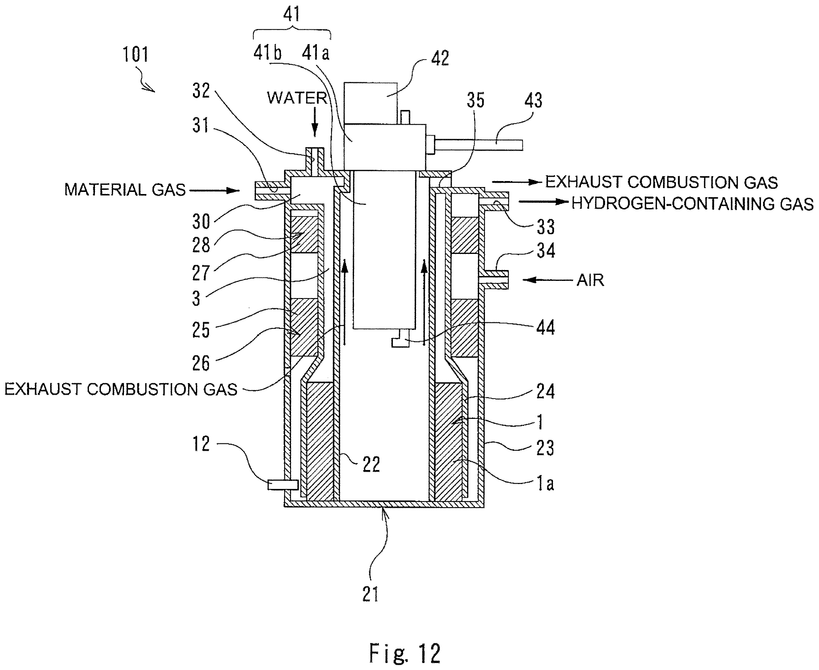

Meanwhile, the controller 10 continues the combustion by the heater 11 (step S2). Although the gas supplied to the heater 11 is in a combustible condition for a while after the stop of the supplying of the material gas and the supplying of water, the gas supplied from the reformer 1 to the heater 11 eventually becomes incombustible so that the heater 11 causes a fire extinction (step S3). Concretely, the gas becomes incombustible for example when the concentration of steam in the gas increases, causing decreases in the concentration of the combustible gas. Alternatively, it becomes incombustible when the evaporation amount of the residual water decreases, causing decreases in the supply amount of the gas. The fire extinction is detected by the controller 10 through, for example, a frame rod 44 (see the example to be described later and Fig. 12) for detecting the combustion state of the heater 11.

Upon detection of the fire extinction of the heater 11, the controller 10 opens the first sealing device to supply the material gas (step S4). The supplying of the material gas is performed over the period of evaporation of the residual water, after a fire extinction has occurred in the heater 11. This residual water evaporation period can be obtained, for example, by experimentally detecting the period during which the gas flows into the heater 11 after a fire extinction has occurred in the heater 11. In the step 4, the material gas supply device 13 may be operated concurrently with the opening of the first sealing device.

If the material gas is not supplied like the conventional hydrogen generators during the residual water evaporation period after the stop of the supplying of the material gas and the supplying of water, the gases such as hydrogen and the material gas, which remain in the reformer 1 when the supplying of water is stopped, are pushed out by the steam generated by the evaporator so that steam atmosphere is formed within the reformer 1 and there arises the possibility that the reforming catalyst 1a is subjected to steam oxidation. In contrast with this, the steam oxidation of the reforming catalyst 1a is less likely to occur in the hydrogen generator of this embodiment, because the steam concentration in the reformer 1 decreases to a higher extent than in the conventional hydrogen generators after stopping the supplying of water, thanks to the configuration in which the material gas is supplied over the residual water evaporation period after the stop of the supplying of water. Further, a reforming reaction occurs between the material gas supplied to the reformer 1 and the steam existing in the reformer 1, generating hydrogen. The generation of hydrogen causes a decrease in the steam concentration. In addition, the generated hydrogen has the effect of suppressing steam oxidation. With these effects, the steam oxidation of the reforming catalyst 1a can be further restricted. It is preferable to control the supply amount of the material gas so as not to cause coking in the material gas within the reformer 1, when the material gas is supplied, at least with the reformer 1 being at a temperature which causes coking in the material gas.

Concretely, the supply amount of the material gas is controlled such that the steam to carbon ratio (hereinafter referred to as "S/C"), obtained after supplying the material gas subsequently to the stop of the supplying of water, falls within a range which does not cause the coking in the material gas. Note that the steam carbon ratio is the ratio of the number of moles of vapor molecules to the number of moles of the carbon atoms of the material gas within the reformer 1. A desirable range of the S/C ratio is represented by, for example, S/C ≥ 2. In cases where the temperature of the reformer 1 when supplying the material gas does not incur coking in the material gas, there is no need to limit the supply amount of the material gas but it may be arbitrarily determined, and it does not matter if the inside of the reformer 1 is substituted with, for instance, a material gas atmosphere or the material gas. The temperature which causes coking in the material gas is properly set according to the type of the reforming catalyst and the type of the material gas. For instance, it is set to 500°C in cases where the main component of the material gas is methane and a Ru catalyst is used as the reforming catalyst.

The supplying of the material gas may be performed after a fire extinction has occurred in the heater 11. The timing for the start of supplying the material gas may be prior to, subsequent to or simultaneous with occurrence of a fire extinction in the heater 11. The supplying of the material gas may be performed in either a continuous manner or an intermittent manner.

The controller 10 stops the supplying of the material gas after the residual water evaporation period has elapsed subsequently to the stop of the supplying of water.

### (Second Embodiment)

The second embodiment is associated with a hydrogen generator which has a sealing device for providing discommunication between a reformer and the atmosphere and in which the controller is configured to, after stopping the supplying of the material gas to the reformer and the supplying of water to the evaporator, execute a sealing process for sealing the reformer by controlling the sealing device, and execute both a depressurization process and a material gas supplying process. The depressurization process is such that the sealing device is opened to expose the reformer to the atmosphere as the inner pressure of the reformer increases after completion of the sealing process. The material gas supplying process is such that the material gas supply device is controlled to supply the material gas to the reformer.

According to this configuration, the material is supplied to the reformer in association with the depressurization process so that the concentration of the steam, remaining within the reformer after the depressurization, is reduced as compared to the conventional hydrogen generators. As a result, the steam oxidation of the reforming catalyst can be restricted to a higher extent than in the conventional hydrogen generators.

In addition, the concentration of the material gas remaining within the reformer after execution of the depressurization process and the material gas supplying process can be more increased than the conventional hydrogen generators so that the amount of hydrogen produced by the reforming reaction between the material gas and the residual steam can be increased. Thus, the steam oxidation of the reforming catalyst can be advantageously restricted by the increased hydrogen. As long as the reformer is at a temperature that does not cause coking in the material, steam and the material gas need not necessarily remain within the reformer after execution of both of the above processes. In this condition, a material gas atmosphere may be formed within the reformer after execution of the above processes, because the steam oxidation can be equally restricted.

The controller may be configured to perform the material gas supplying process at the same time with the depressurization process.

In addition, the controller may be configured to perform the material gas supplying process at least when the reformer is at a temperature that causes the steam oxidation of the reforming catalyst.

The second embodiment is associated with a method of operating the hydrogen generator, the method including a step (e) of closing the sealing device to seal the reformer after stopping the supplying of the material gas to the reformer and the supplying of water to the evaporator. The step (c) of supplying the material gas to the reformer by the material gas supply device includes a step (c2) of executing both the depressurization process and the material gas supplying process, the depressurization process being such that the reformer is exposed to the atmosphere by opening the sealing device as an inner pressure of the reformer increases after the step (e) and the material gas supplying process being such that the material gas is supplied to the reformer by the material gas supply device.

According to this configuration, the material is supplied to the reformer in association with the depressurization process so that the concentration of the steam, remaining within the reformer after the depressurization, is reduced as compared to the conventional hydrogen generator operating methods. As a result, the steam oxidation of the reforming catalyst can be restricted to a higher extent than in the conventional hydrogen generator operating methods.

In the second embodiment, in the step (c2), the material gas supplying process may be executed at the same time with the depressurization process.

In the second embodiment, in the step (c), at least the supplying of the material gas may be performed when the reformer is at a temperature that causes the steam oxidation of the reforming catalyst.

The second embodiment provides one form for restricting the steam oxidation of the reforming catalyst in a so-called closed system hydrogen generator that includes a sealing device for providing discommunication between the reformer and the atmosphere.

### (Configuration of Hydrogen Generator)

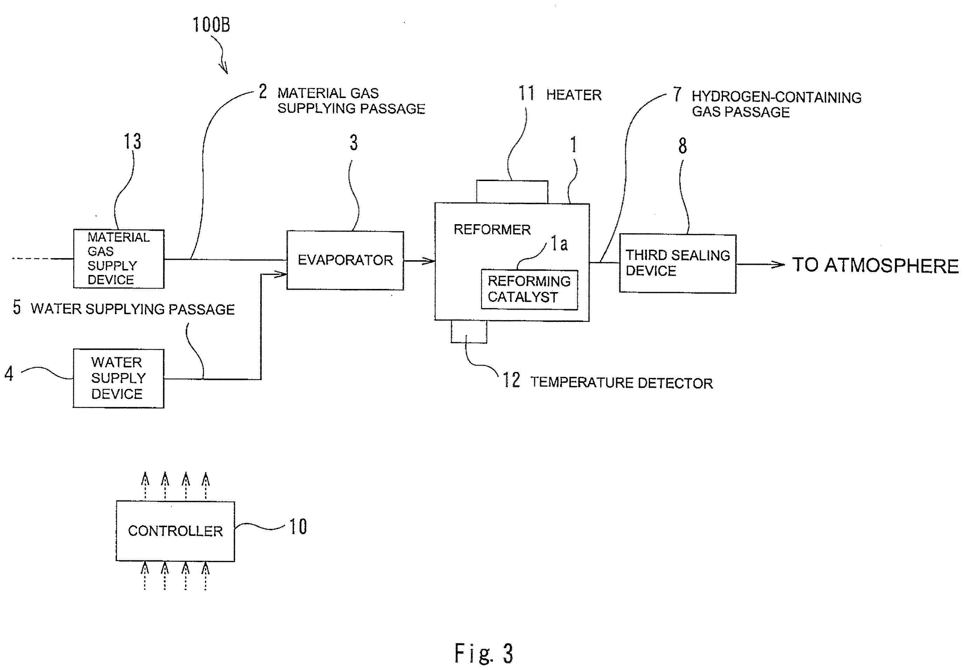

Fig. 3 is a block diagram showing the configuration of another hydrogen generator. First, the configuration of the hardware will be described.

As illustrated in Fig. 3, the hydrogen generator 100B structurally differs from the hydrogen generator 100A in that the hydrogen generator 100B further includes a third sealing device 8. Except for this point, the hydrogen generator 100B has the same configuration as that of the hydrogen generator 100A. The third sealing device 8 is for providing discommunication between the reformer 1 and the atmosphere. The controller 10 is configured to execute the sealing process described later, the depressurization process and the material gas supplying process.

### (Operation of Hydrogen Generator)

Next, the operation of the hydrogen generator 100B (the method of operating the hydrogen generator 100B) will be described. The operation of the hydrogen generator 100B is executed by the control of the controller 10. The general operation of the hydrogen generator 100B does not differ from that of the hydrogen generator 100A. It should be noted that during the hydrogen generating operation of the hydrogen generator 100B, the third sealing device 8 is opened together with the first and second sealing devices.

Next, the operation that characterizes this embodiment will be described.

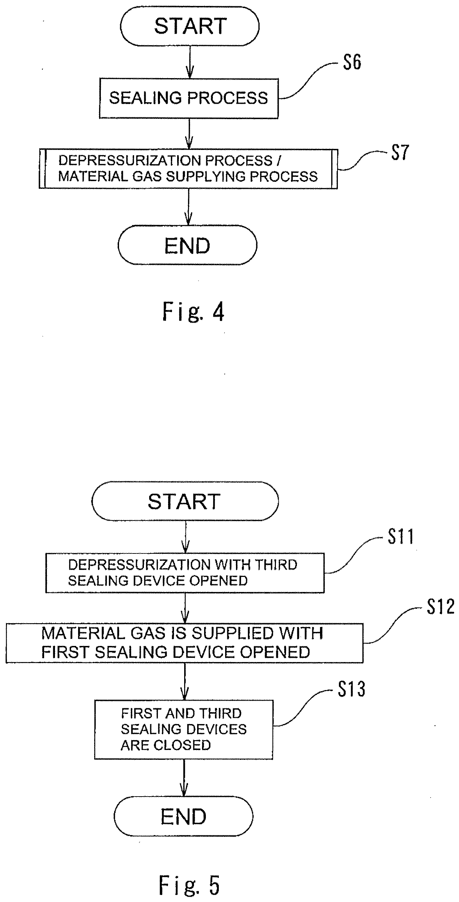

Fig. 4 is a flow chart showing the shut-down operation of the hydrogen generator shown in Fig. 3. Fig. 5 is a flow chart showing the contents of the depressurization process and the material gas supplying process shown in the flow chart of Fig. 4.

As shown in Fig. 4, during the shut-down of the hydrogen generator 100B, the controller 10 firstly executes the sealing process (step S6) and then executes both the depressurization process and the material gas supplying process (step S7).

More specifically, the controller 10 closes the first sealing device, the second sealing device and the third sealing device 8 in the sealing process (step S6). This causes the residual gas to be confined in the evaporator 3 and the reformer 1. Water remains within the evaporator 3. The residual gas is composed essentially of the hydrogen-containing gas which has been produced, the material gas and steam. At the relatively early stage after the stop of the operation of the hydrogen generator, the hydrogen generator 100B including the reformer 1 is kept at relatively high temperatures owing to the residual heat and therefore the water remaining in the evaporator 3 evaporates after the sealing process. This causes an increase in the inner pressure of the reformer 1.

As shown in Fig. 5, the controller 10 opens the third sealing device 8 (step S11) during the depressurization process and the material gas supplying process (step S7). This causes the residual gas to flow into the hydrogen-containing gas passage 7 from the outlet of the reformer 1 so that the reformer 1 is depressurized. The increase in the inner pressure of the reformer 1, based on which the controller 10 determines that the above depressurization is necessary, is detected by a detector for directly or indirectly sensing the inner pressure of the reformer 1. In cases where the inner pressure of the reformer 1 is directly detected, the detection is carried out by use of a pressure detector (not shown). For indirectly detecting the inner pressure of the reformer 1, a timer (not shown) is used. It should be noted that where a timer is used to detect the inner pressure of the reformer 1, the increase in the inner pressure of the reformer 1, which gives rise to a need for the depressurization, is indirectly detected by measuring the time elapsing after execution of the sealing process. Also, completion of the depressurization can be detected in the same way as described just above by means of a detector that directly or indirectly detects the inner pressure of the reformer 1. Concretely, the controller 10 determines that the depressurization of the reformer 1 has been completed, upon detecting, by the detector, the fact that the inner pressure of the reformer 1 has become equal to the atmospheric pressure after opening the third sealing device 8.

The controller 10 opens the first sealing device (step S12). The timing for the opening of the first sealing device may be simultaneous with or subsequent to the opening of the third sealing device 8. It is also possible to put the material gas supply device 13 into operation subsequently to the opening of the first sealing device.

If the material gas supplying process is not executed in association with the execution of the depressurization process like the conventional hydrogen generators, other gases than steam such as hydrogen and the material gas, which are caused by the sealing process to remain in the reformer 1, are pushed out by the steam generated in the evaporator by the depressurization process so that a steam atmosphere is formed within the reformer 1, giving rise to the possibility of steam oxidation of the reforming catalyst 1a. In contrast with this, the hydrogen generator of this embodiment is configured to execute the material gas supplying process in association with the depressurization process. Therefore, the concentration of steam within the reformer 1 after the depressurization process can be reduced as compared to the conventional systems and, in consequence, the possibility of steam oxidation of the reforming catalyst 1a is reduced. Further, a reforming reaction occurs between the material gas supplied to the reformer 1 and the steam existing in the reformer 1, generating hydrogen. The generation of hydrogen causes a decrease in the steam concentration. In addition, the generated hydrogen has the effect of suppressing steam oxidation. With these effects, the steam oxidation of the reforming catalyst 1a can be further restricted.

It should be noted that it is preferable to control the supply amount of the material gas so as not to cause coking in the material gas within the reformer 1, when the material gas supplying process is executed, at least with the reformer 1 being at a temperature that causes coking in the material gas.

Concretely, the supply amount of the material gas is controlled such that the S/C obtained after execution of the depressurization process and the material gas supplying process falls within a range which does not cause coking in the material gas, the S/C being the ratio of the number of moles of vapor molecules to the number of moles of the carbon atoms of the material gas within the reformer 1. A desirable range of the S/C is represented by, for example, S/C ≥ 2. As long as the temperature of the reformer 1 when executing the material gas supplying process does not cause coking in the material gas, there is no need to limit the supply amount of the material gas but it may be arbitrarily determined. In this condition, it does not matter if the inside of the reformer 1 is substituted with, for instance, a material gas atmosphere or the material gas. The temperature which causes coking in the material gas is properly set according to the type of the reforming catalyst and the type of the material gas. For instance, it is set to 500°C in cases where the main component of the material gas is methane and the reforming catalyst is a Ru catalyst.

Then, the controller 10 closes the first sealing device and the third sealing device 8 (step S13) subsequently to completion of the depressurization process and the material gas supplying process. As a result, the reformer 1 is sealed again.

### (Third Embodiment)

The third embodiment provides a hydrogen generator 100C in which the controller is configured to execute the material gas supplying process by opening the first sealing device in its closed state and putting the material gas supply device into operation to inject the material gas into the reformer.

The controller may be configured to open the third sealing device while closing the first sealing device after the injection of the material gas, whereby the reformer is exposed to the atmosphere (the depressurization process).

Further, the controller may be configured to control the injection amount of the material gas such that coking in the material gas does not occur within the reformer, when the material gas supplying process is executed at least with the reformer being at a temperature that causes coking in the material. Regarding the concrete injection amount control, it is preferable to control the injection amount such that the S/C obtained after the material gas supplying process and the depressurization process falls within the range which does not cause coking. In cases where the temperature of the reformer 1 when executing the material gas supplying process does not cause coking in the material gas, the injection amount of the material gas does not need to be limited but may be arbitrarily determined. It does not matter if the inside of the reformer 1 after the material gas supplying process and the depressurization process may be substituted with, for instance, a material gas atmosphere or the material gas.

The third embodiment will be concretely described below.

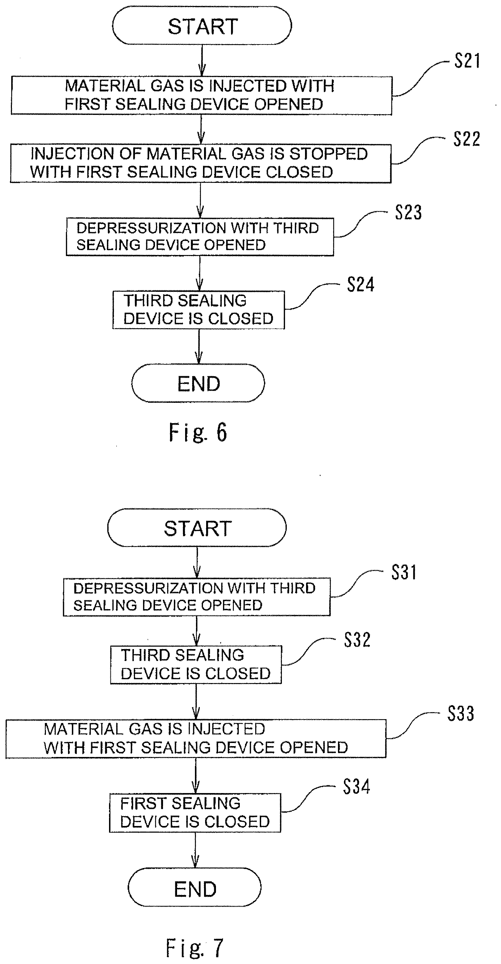

Fig. 6 is a flow chart showing the contents of the depressurization process and the material gas supplying process during shut-down of the hydrogen generator according to the third embodiment.

As seen from Fig. 6, the hydrogen generator 100C of the third embodiment differs from the hydrogen generator 100B of the second embodiment in the depressurization process and the material gas supplying process performed at the time of shut-down of the hydrogen generator. Except for this point, the hydrogen generator 100C of the third embodiment has the same configuration as of the hydrogen generator 100B of the second embodiment.

Concretely, the hydrogen generator 100C of the third embodiment executes the depressurization process and the material gas supplying process in the following way at the time of shut-down.

As shown in Fig. 6, during the depressurization process and the material gas supplying process (step S7 of the flow chart shown in Fig. 4), the controller 10 opens the first sealing device and puts the material gas supply device 13 into operation to inject the material gas into the reformer 1 (step S21). The controller 10 is configured such that when the material gas supplying process is performed with the reformer 1 being at a temperature that causes coking in the material gas, the controller 10 controls the injection amount of the material gas so as not to cause coking in the material gas within the reformer 1 after opening the third sealing device 8. After injecting the material gas in a predetermined amount, the controller 10 stops the injection of the material gas by stopping the material gas supply device 13.

Then, the controller 10 closes the first sealing device (step S22).

The controller 10 subsequently opens the third sealing device 8 (step S23). This causes the reformer 1 to be exposed to the atmosphere and depressurized. Completion of the depressurization is detected in the same way as described in the second embodiment.

Then, the controller 10 closes the third sealing device 8 to seal the reformer 1 again (step S24). In this way, the depressurization process and the material gas supplying process are completed.

The above-described depressurization process and material gas supplying process also enable it to reduce the possibility of steam oxidation of the reforming catalyst 1a, like the second embodiment.

### (Fourth Embodiment)

In the fourth embodiment, the controller is configured to execute the material gas supplying process subsequently to the depressurization process.

According to the fourth embodiment, in the step (c2) of executing both the depressurization process and the material gas supplying process, the material gas supplying process is executed after performing the depressurization process.

The fourth embodiment will be concretely described below. Fig. 7 is a flow chart showing the contents of the depressurization process and the material gas supplying process at the time of shut-down of the hydrogen generator according to the fourth embodiment.

The fourth embodiment provides a hydrogen generator 100D which differs from the hydrogen generator 100B of the second embodiment in the depressurization process and the material gas supplying process. Except for this point, the hydrogen generator 100D of the fourth embodiment has the same configuration as of the hydrogen generator 100B of the second embodiment.

As shown in Fig. 7, in the depressurization process and the material gas supplying process (step S7 in the flow chart of Fig. 4), the controller 10 firstly opens the third sealing device 8 (step S31). This causes the reformer 1 to be exposed to the atmosphere and depressurized. Completion of the depressurization is detected in the same way as described in the second embodiment.

Then, the controller 10 closes the third sealing device 8 (step S32). In this way, the depressurization process is completed.

Thereafter, the controller 10 opens the first sealing device and puts the material gas supply device 13 into operation to inject the material gas into the reformer 1 (step S33). This material gas supplying is performed in the same way as of the third embodiment. Specifically, the controller 10 is configured such that when executing the above-described depressurization with the reformer 1 being at a temperature which causes coking in the material gas, the controller 10 controls, as described earlier, the injection amount of the material gas so as not to cause coking in the material gas within the reformer 1. On the other hand, when executing the above depressurization with the reformer being at a temperature which does not cause coking in the material gas, the controller 10 does not need to limit the amount of the material gas to be supplied to the reformer 1 as mentioned earlier. After injecting the material gas in a predetermined amount, the controller 10 stops the injection of the material gas by stopping the material gas supply device 13.

Then, the controller 10 closes the first sealing device (step S34). In this way, the depressurization process and the material gas supplying process are completed.

Similarly to the second embodiment, the above-described depressurization process and material gas supplying process enable it to reduce the possibility of steam oxidation of the reforming catalyst 1a.

### (Fifth Embodiment)

According to the fifth embodiment, the controller is configured to execute, after performing the depressurization process and the material gas supplying process, a pressure makeup process to supply the material gas to the reformer by opening the first sealing device, to make up for a decrease in the inner pressure of the reformer which pressure decrease occurs along with a decrease in the temperature of the reformer.

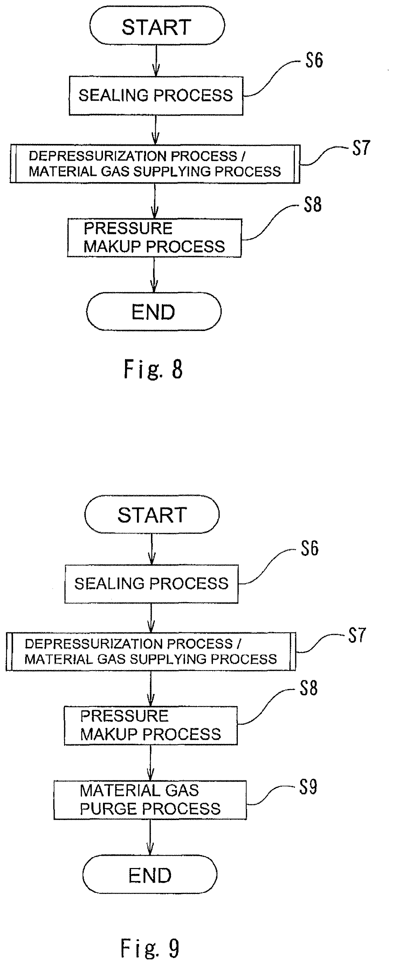

The fifth embodiment will be concretely described below. Fig. 8 is a flow chart showing the contents of an operation for shut-down of the hydrogen generator according to the fifth embodiment.

The fifth embodiment provides a hydrogen generator 100E which differs from the hydrogen generator 100B of the second embodiment in that the hydrogen generator 100E executes the pressure makeup process at the time of shut-down. Except for this point, the hydrogen generator 100E of the fifth embodiment has the same configuration as of the hydrogen generator 100B of the second embodiment.

The hardware of the hydrogen generator 100E of the fifth embodiment has the configuration shown in Fig. 3.

As shown in Fig. 8, the hydrogen generator 100E of the fifth embodiment is configured such that during the period of shut-down, the controller 10 executes the sealing process (step S6), the depressurization process and the material gas supplying process (step S7) sequentially like the second embodiment and then executes the pressure makeup process (step S8). This pressure makeup process is a known technique and therefore will be briefly explained. In the depressurization process and the material gas supplying process (step S6), upon stopping the hydrogen generating operation of the hydrogen generator 100E, the temperature of the reformer 1 starts to decrease. For a while after the stop of the hydrogen generating operation, the inner pressure of the reformer 1 increases because of the evaporation of water remaining in the evaporator 3 and the reformer 1, and the depressurization process and the material gas supplying process are executed. After the residual water in the evaporator 3 and the reformer 1 has completely evaporated, the inner pressure of the reformer 1 starts to decrease as the temperature of the reformer 1 decreases.

In this embodiment, the controller 10 opens the first sealing device to supply the material gas in order that the inner pressure of the reformer 1 is prevented from becoming excessively negative owing to the decrease of the inner pressure of the reformer 1. This enables it to supply the material gas to the reformer 1 so that the inner pressure of the reformer 1 becomes equal to the supply pressure of the material gas. Thereafter, the controller 10 closes the first sealing device. Accordingly, the pressure makeup process is completed. The pressure makeup process is executed by the controller 10 if it is determined that the inner pressure of the reformer 1 has become equal to or lower than a specified threshold pressure value at which the pressure makeup process becomes necessary. This determination is made based on a detection value obtained by a detector for directly or indirectly detecting the inner pressure of the reformer 1. In cases where the inner pressure of the reformer 1 is directly detected, the pressure makeup process is executed when the detection value obtained by a pressure detector (not shown) becomes equal to or lower than the specified threshold pressure value which indicates a need for the pressure makeup process. In cases where the inner pressure of the reformer 1 is indirectly detected, a temperature detector or time detector (not shown), for example, is used and when the detection value obtained by such a detector becomes equal to a specified threshold value indicative of a need for the pressure makeup process, the pressure makeup process is executed.

The fifth embodiment enables it to reduce the possibility of oxidation of the reforming catalyst 1a, which oxidation is caused by air penetrating into the reformer 1 from outside after the inner pressure of the reformer 1 has become negative.

### (First Modification)

According to the first modification of the fifth embodiment, the configurations of the third and fourth embodiments are modified such that the controller 10 executes the pressure makeup process in the same way as described earlier. This enables it to obtain the same effect as described earlier.

### (Sixth Embodiment)

In the sixth embodiment, the controller is configured to execute a gas purge process for purging the inside of the reformer with the material gas.

The sixth embodiment will be concretely described below. Fig. 9 is a flow chart showing the contents of an operation for shut-down of the hydrogen generator according to the fifth embodiment.

The hydrogen generator 100F of the sixth embodiment differs from the hydrogen generator 100E of the fifth embodiment (including the first modification) in that a material gas purge process is executed at the time of shut-down. Except for this point, the hydrogen generator 100F of the sixth embodiment has the same configuration as of the hydrogen generator 100E of the fifth embodiment.

As shown in Fig. 9, the hydrogen generator 100F of the sixth embodiment is configured such that, during the period of shut-down, the controller 10 sequentially executes the sealing process (step S6), the depressurization process and the material gas supplying process (step S7) and the pressure makeup process (step S8) similarly to the fifth embodiment and then executes the material gas purge process (step S9). This material gas purge process is a known technique and therefore will be briefly explained. After a sufficient time has elapsed after stopping the hydrogen generating operation of the hydrogen generator 100F, the temperature of the reformer 1 decreases to a value which does not cause coking in the material gas. In the sixth embodiment, the controller 10 is configured to execute the material gas purge process after the temperature of the reformer 1 detected by, for example, the temperature detector 12 has decreased to the value (specified value) which does not cause coking in the material gas.

In the material gas purge process, the controller 10 firstly puts the material gas supply device 13 into operation while opening the first sealing device and the third sealing device 8. This allows the gas confined in the reformer 1 by sealing to be substituted with the material gas. Thereafter, the controller 10 shuts down the material gas supply device 13 while closing the first sealing device and the third sealing device 8. In this way, the material gas purge process is completed. The execution time of the material gas purge process is defined as, for example, the time supposed to be taken for the supply amount of the material gas in the above process to reach such a level that at least the gas existing within the reformer 1 is replaceable with the material gas. And, this execution time is determined based on an experiment, simulation, calculation or the like.

### (Second Modification)

According to the second modification of the sixth embodiment, the configurations of the second to fourth embodiments are modified such that the controller 10 executes, as described earlier, the material gas purge process (step S9) subsequently to the depressurization process and the material gas supplying process (step S7) without performing the pressure makeup process. This enables it to obtain the same effect as described earlier.

### (Seventh Embodiment)

The seventh embodiment is associated with a hydrogen generator further including a deodorization device which is located at a position upstream of the first sealing device within the material gas supplying passage, for removing odorous components from the material gas.

According to the seventh embodiment, the operation method of the hydrogen generator further includes a step (f) of removing odorous components from the material gas to be supplied to the reformer.

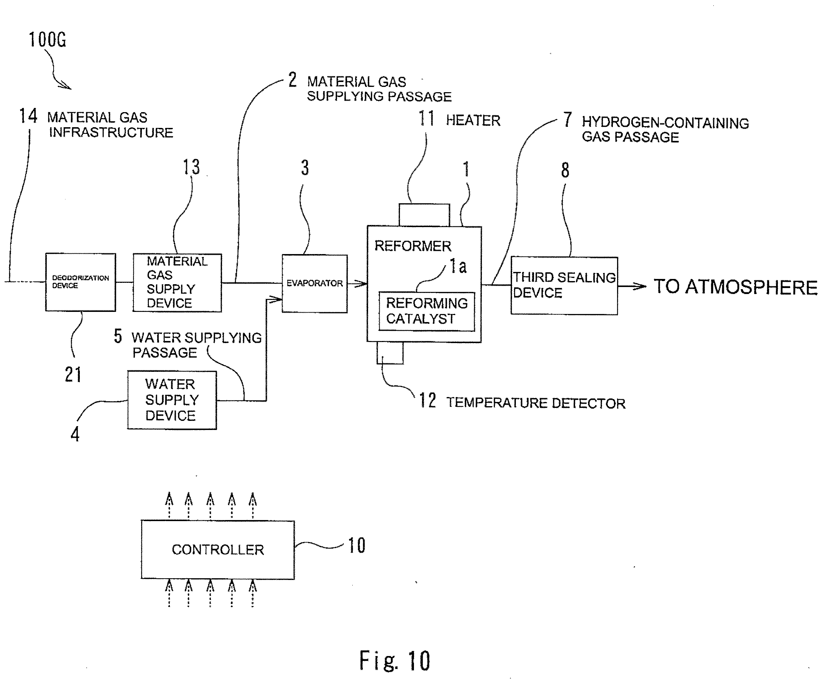

Fig. 10 is a block diagram showing the configuration of the hydrogen generator according to the seventh embodiment. The hydrogen generator 100G of the seventh embodiment shown in Fig. 10 is constructed by modifying the hydrogen generator 100B of the second embodiment such that the material gas supply device 13 is constituted by, for instance, a booster pump which is connected to a material gas infrastructure 14 and is capable of controlling the flow rate of the material gas; and such that the material gas supplying passage 2 is provided with a deodorization device 21 which is located at a position upstream of the first sealing device, for removing the odorous components of the material gas. Examples of the odorous components of the material gas include sulfuric compounds. Although the deodorization device 21 incorporated in the hydrogen generator 100G of this embodiment is composed of a zeolite-based absorbing agent for removing the sulfuric compounds of the material gas, the deodorization device 21 is not limited to this but may be others. For instance, a hydrogenated desulfurization catalyst may be used as the deodorization device 21. Although the deodorization device 21 is disposed upstream of the material gas supply device 13 in the hydrogen generator 100G of this embodiment, it may be disposed downstream of the material gas supply device 13.

The hydrogen generator 100G of this embodiment is characterized in that the shut-down operation is performed similarly to the hydrogen generator 100B of the second embodiment with the above-described configuration.

Thanks to the provision of the deodorization device 21 located upstream of the first sealing device, the backflow of steam to the deodorization device 21 can be restricted by the closed, first sealing device even if the residual water in the evaporator 3 evaporates after the process of sealing the reformer 1. This enables it to prevent a decrease in service life due to the absorption of steam by the deodorization device 21. In addition, during execution of the depressurization process and the material gas supplying process, the first sealing device is controlled to be opened simultaneously with or subsequently to the opening of the third sealing device 8, so that the back flow of steam into the deodorization device 21 is restricted in these processes.

The third to sixth embodiments (including the first and second modifications) may be provided with the deodorization device 21 like the above embodiment.

### (Eighth Embodiment)

The eighth embodiment exemplifies a fuel cell system which includes any one of the hydrogen generators described and a fuel cell for generating electric power by use of hydrogen-containing gas flowing from the hydrogen generator.

This system will be concretely explained below.

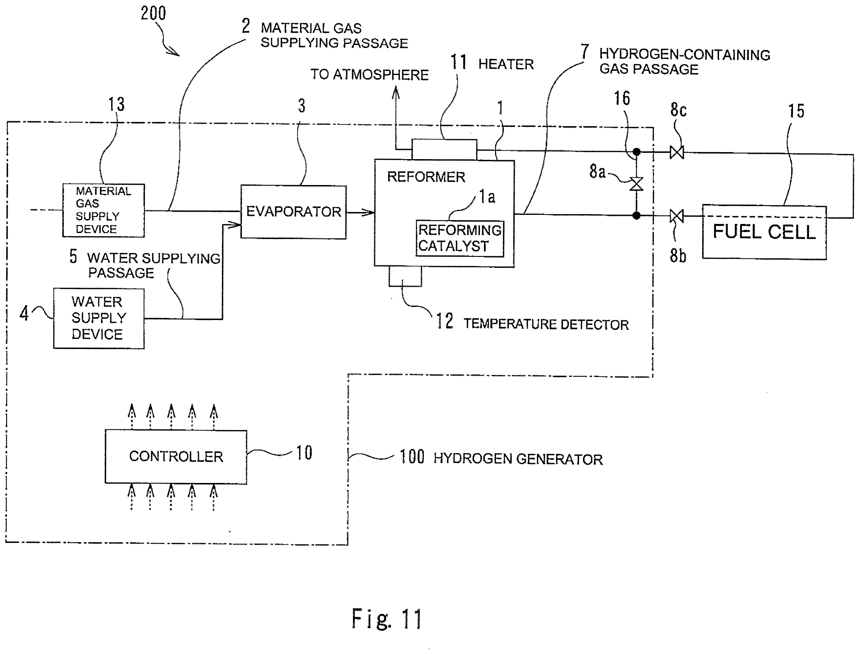

Fig. 11 is a block diagram showing the configuration of the fuel cell system. As shown in Fig. 11, the fuel cell system 200 has a hydrogen generator 100 that consists of any one of the hydrogen generators 100A to 100G and a fuel cell 15. Fig. 11 shows the hydrogen generator 100B as one example of the hydrogen generator 100. In cases where the hydrogen generator 100A is used as the hydrogen generator 100, at least either an on-off valve 8a or on-off valves 8b, 8c are eliminated.

The fuel cell 15 may be of any known type as long as it uses a hydrogen-containing gas as a reductant agent gas. The configuration of the fuel cell 15 is known and therefore only the matters associated with the invention will be explained while others being skipped herein.

The fuel cell 15 is disposed at a position along the hydrogen-containing gas passage 7 of the hydrogen generator 100. The part of the hydrogen-containing gas passage 7 passes through the heater 11, which part is located downstream of the fuel cell 15. The on-off valve 8b is disposed at a position of the hydrogen-containing gas passage 7 between the reformer 1 and the fuel cell 15 whereas the on-off valve 8c is disposed at a position of the hydrogen-containing gas passage 7 between the fuel cell 15 and the heater 11. A bypass pathway 16 is provided for connecting the part of the hydrogen-containing gas passage 7 upstream of the on-off valve 8b and the part of the hydrogen-containing gas passage 7 downstream of the on-off valve 8c. The bypass pathway 16 is provided with the on-off valve 8a. By opening and closing the on-off valves 8a, 8b and 8c with the controller 10, the destination of the gas flowing out of the outlet of the reformer 1 can be switched between the bypass pathway 16 and the fuel cell 15. The part of the hydrogen-containing gas passage 7 between the reformer 1 and the fuel cell 15 functions as a fuel gas supplying passage; the part of the hydrogen-containing gas passage 7 between the fuel cell 15 and the heater 11 functions as an off gas discharging passage; and the part of the hydrogen-containing gas passage 7 located downstream of the heater 11 functions as a combustion gas discharging passage.

In the fuel cell system 200 having the above-described configuration, the hydrogen-containing gas generated in the reformer 1 is supplied to the heater 11 by way of the bypass pathway 16 by opening the on-off valve 8a and closing the on-off valves 8b, 8c at the time of start-up. During the power generating operation of the fuel cell system, the hydrogen-containing gas generated in the reformer 1 is supplied to the heater 11 as an off gas by way of the fuel cell 15 by closing the on-off valve 8a and opening the on-off valves 8b, 8c. The heater 11 heats the reformer 1 and the evaporator 3 by combusting the gas supplied thereto. In the heater 11, the gas (exhaust combustion gas) generated by the combustion of the hydrogen-containing gas or the off gas is released to the atmosphere by way of the part of the hydrogen-containing gas passage 7 located downstream of the heater 11.

At the time of shut-down of the fuel cell system 200, the power generation of the fuel cell 15 and the hydrogen generating operation of the hydrogen generator 100 are stopped, and the sealing process, the subsequent depressurization process and material gas supplying process are executed similarly to the hydrogen generators of the first to seventh embodiments (including the first and second modifications). Although the on-off valve 8a serves as the sealing device in the process described above, the sealing device is not limited to this. In other alternatives, the on-off valves 8b, 8c may serve as the sealing device, or the on-off valve 8c may serve as the sealing device. That is, any of the on-off valves may be used as the sealing device as long as they can provide discommunication between the reformer and the atmosphere.

In the fuel cell system 200 having the above configuration, the possibility of steam oxidation of the reforming catalyst 1a at the time of shut-down of the hydrogen generator 100 can be reduced.

In the first to seventh embodiments (including the first and second modifications), either a shift converter or a shift converter plus a CO removing device may be disposed at a position downstream of the reformer 1 in order to reduce the carbon monoxide concentration of the hydrogen-containing gas generated in the reformer 1. The above CO removing device is designed to reduce carbon monoxide by at least either the oxidation reaction or methanation reaction of carbon monoxide.

Additionally, in the first to seventh embodiments (including the first and second modifications), the first sealing device or the first sealing device and the third sealing device 8 may be manually operated without controlling by the controller 10.

### (Example)

Next, one example of the hydrogen generating device adapted for use in the hydrogen generators will be described. Although the following description is associated with one configuration example in which the hydrogen generating device includes a shift converter and a CO removing device in addition to the reformer, the shift converter and CO removing device may be omitted.

Fig. 12 is a longitudinal sectional view showing the configuration of the hydrogen generating device which is applicable to the embodiments of the invention.

As shown in Fig. 12, the hydrogen generating device 101 of this example has a double-cylinder housing (case) 21 composed of an inner cylinder 22 and an outer cylinder 23 which are closed at the ends thereof. The space between the inner cylinder 22 and outer cylinder 23 of the housing 21 is properly partitioned by a cylindrical partition wall 24 such that a gas flow passage 30 is formed in the space. The housing 21 is provided with a material gas supplying port 31 and a water supplying port 32 which are formed so as to be communicated with the upstream end of the gas flow passage 30. The housing 21 is also provided with a hydrogen-containing gas outlet port 33 that is communicated with the downstream end of the gas flow passage 30. This gas flow passage 30 is provided with the reforming catalyst 1a, a shift converter catalyst 25 and an oxidation catalyst 27 which are aligned in this order from the upstream end to downstream end of the gas flow passage 30. The reforming catalyst 1a, the shift converter catalyst 25 and the oxidation catalyst 27 provided in this gas flow passage constitute the reformer 1, a shift converter 26 and an oxidation device 28, respectively. Representative examples of the reforming catalyst include Ni catalysts. Representative examples of the shift converter catalyst 25 include Cu-Zn catalysts. Representative examples of the catalyst that promotes the oxidation reaction and methanation reaction of carbon monoxide include Ru catalysts. The gas flow passage 30 extending between the upstream end and the reforming catalyst 1a is defined by the inner cylinder 22 and the partition wall 24 and constitutes the evaporator 3. The shift converter catalyst 25 and the oxidation catalyst 27 are located between the partition wall 24 and the outer cylinder 23, and an air supplying port 34 is provided in the housing 21 so as to be communicated with the portion of the gas flow passage 30 between the shift converter catalyst 25 and the oxidation catalyst 27.

Further, a burner 41, which is one example of the combustor, is attached to the housing 21 so as to be inserted in the inner space of the inner cylinder 22. The burner 41 has a base part 41a and a combustion cylinder 41b. The base part 41a is attached to the outer surface of the housing 21 whereas the combustion cylinder 41b is attached to the base part 41b so as to be inserted in the inner space of the inner cylinder 22. The base part 41b of the burner 41 is equipped with a combustion fan 42 for supplying combustion air. The burner 41 and the combustion fan 42 constitute the heater 11 provided for the hydrogen generators 100A to 100G of the above-described examples.

Connected to the base part 41b of the burner 41 is a combustion gas supplying pipe 43. An exhaust combustion gas discharge port 35 is provided in the vicinity of the base part 41b of the housing 21 so as to be communicated with the inner space of the inner cylinder 22. This combustion gas supplying pipe 43 and the exhaust combustion gas discharge port 35 constitute a part of the hydrogen-containing gas passage 7 of the seventh embodiment.

The burner 41 includes an igniter (not shown) serving as an ignition source and a frame rod 44 for detecting the combustion state of the inside of the combustion cylinder 41b. A fire extinction occurring in the burner 41 is detected by this frame rod 7.

The temperature detector 12 is disposed in the vicinity of the reformer 1 of the hydrogen generating device 101, for detecting the temperature of the reformer 1.

Next, the operation of the hydrogen generators having the hydrogen generating device of the above-described configuration will be described.

The base part 41b of the burner 41 is supplied with combustion gas supplied from the combustion gas supplying pipe 43 and combustion air supplied from the combustion fan 42. A mixed gas of the supplied gas and the supplied air is combusted within the inner space of the combustion cylinder 41b. Ignition for this combustion is done by the igniter described above and the state of the combustion is detected by the frame rod 44.

The exhaust combustion gas generated by the combustion in the combustion cylinder 41b flows from the leading end of the combustion cylinder 41b into the inner space of the inner cylinder 22 and is then discharged to the outside through the exhaust combustion gas discharge port 35. In this course, the heat of the exhaust combustion gas is transmitted to the reformer 1 and the evaporator 3. In this way, the reformer 1 and the evaporator 3 are heated by the burner 41 (heater 11).

The hydrogen generating device 101 is supplied with the material gas through the material gas supplying port 31 and with water through the water supplying port 32. While the material gas and the water passing through the evaporator 3, the water is evaporated by the heat transmitted from the burner 41, generating steam and the temperature of the material gas increases. The material gas reacts with the steam, causing a reforming reaction under the influence of the reforming catalyst 1a within the reformer 1, so that hydrogen-containing gas is generated. The oxygen monoxide concentration of this hydrogen-containing gas is reduced by the reforming reaction in the shift converter 26 and then further reduced by the oxidation in the oxidation device 28, using air supplied from the air supplying port 34. The hydrogen-containing gas, which has been thus reduced in carbon monoxide concentration, is discharged outwardly from the hydrogen-containing gas outlet port 33.

In the hydrogen generating device 101 having the above configuration and operating in the way described above, the temperatures of the reformer 1 and the evaporator 3 gradually drop from their respective operating temperatures during the shut-down operation of the hydrogen generators 100A to 100G of the first to seventh embodiments. In the course of shut-down of the hydrogen generators 100A to 100G according to the first to seventh embodiments, the controller 10 firstly closes the first sealing device or the first sealing device and the third sealing device 8 thereby executing the sealing process to seal the reformer 1. This enables it to confine the material gas, steam and the residual gas consisting of hydrogen-containing gas within the reformer 1, while unevaporated water remaining in the evaporator 3. Thereafter, the water remaining in the evaporator 3 is evaporated by the residual heat of the reformer 1 and the evaporator 3 so that the inner pressure of the reformer 1 (and the evaporator 3) increases. However, the controller 10 opens the third sealing device 8 to expose the reformer 1 to the atmosphere and opens the first sealing device to supply the material gas to the reformer. This causes the reformer 1 to be depressurized from the outlet side (hydrogen-containing gas outlet port 33) so that the residual gas flows out of this outlet. At that time, the material gas is supplied from the inlet side (material gas supplying port 31) and a reforming reaction occurs between this material gas and steam. As a result, the steam within the reformer 1 is consumed while hydrogen is generated, so that the possibility of steam oxidation of the reforming catalyst 1a is reduced.

Numerous modifications and alternative embodiments of the invention will be apparent to those skilled in the art in view of the foregoing description. Accordingly, the description is to be construed as illustrative only, and the details of the structure and/or function maybe varied substantially without departing from the scope of the invention as claimed.

### Industrial Applicability

The method of operating a hydrogen generator according to the invention is regarded as a useful operation method because of its capability of preventing degradation of the reforming catalyst at the time of shut-down.

### Reference Signs List

1: reformer
1a: reforming catalyst
2: material gas supplying passage
3: evaporator
4: water supply device
5: water supplying passage
7: hydrogen-containing gas passage
8: third sealing device
9: device that uses hydrogen
10: controller
11: heater
12: temperature detector
13: material gas supply device
14: material gas infrastructure
15: fuel cell
16: bypass pathway
17: switching device
21: deodorization device
21: housing
22: inner cylinder
23: outer cylinder
24: partition wall
25: shift converter catalyst
26: shift converter
27: oxidation catalyst
28: oxidation device
30: gas flow passage
31: material gas supplying port
32: water supplying port
33: hydrogen-containing gas outlet port
34: air supplying port
35: exhaust combustion gas discharge port
41: burner
41a: base part
41b: combustion cylinder
42: combustion fan
43: combustion gas supplying pipe
44: frame rod
100, 100A to 100G: hydrogen generator
101: hydrogen generating device
200: fuel cell system

## Claims

1. A method of operating a hydrogen generator, comprising steps of:
(a) generating, in a reformer (1), hydrogen-containing gas by a reforming reaction using a material gas and steam generated in an evaporator (3);
(b) stopping supplying of the material gas to the reformer (1) by a material gas supply device (13) and stopping supplying of water to the evaporator (3) by a water supply device (4);
(c) supplying the material gas to the reformer (1) by the material gas supply device (13) in a period during evaporation of residual water in at least one of the evaporator (3) and the reformer (1), after the supplying of the material gas to the reformer (1) and the supplying of water to the evaporator (3) are stopped; and
(d) heating the reformer (1) by combusting in a combustor the gas sent out from the reformer (1), when generating the hydrogen-containing gas in the reformer (1),
wherein the step (c) includes (c1) executing supplying of the material gas to the reformer (1) by the material gas supply device (13) after the gas sent out from the reformer (1) to the combustor becomes incombustible after the supplying of the material gas to the reformer (1) and the supplying of water to the evaporator (3) are stopped, and
wherein, in the step (c), at least the supplying of the material gas is performed in a state in which the reformer (1) is at a temperature which causes steam oxidation of a reforming catalyst (1a) included in the reformer (1).

2. The method of operating a hydrogen generator according to claim 1, further comprising the step of:
(e) sealing the reformer (1) by closing a sealing device after the supplying of the material gas to the reformer (1) and the supplying of water to the evaporator (3) are stopped,
wherein the step (c) includes (c2) executing both of a depressurization process and a material gas supplying process, the depressurization process being such that the reformer (1) is exposed to the atmosphere by opening the sealing device as an increase in an inner pressure of the reformer (1) increases after the step (e), the material gas supplying process being such that the material gas is supplied to the reformer (1) by the material gas supply device (13).

3. The method of operating a hydrogen generator according to claim 2, wherein, in the step (c2), the material gas supplying process is executed at the same time with the depressurization process.

4. The method of operating a hydrogen generator according to claim 2, wherein in the step (c2), the material gas supplying process is executed after the depressurization process.

5. The method of operating a hydrogen generator according to claim 2, further comprising:
(f) removing odorous components from the material gas to be supplied to the reformer.

## Patentansprüche

1. Verfahren zum Betreiben einer Wasserstofferzeugungs-Vorrichtung, das die folgenden Schritte umfasst:
(a) Erzeugen von wasserstoffhaltigem Gas in einem Reformer (1) mittels einer Reformier-Reaktion unter Verwendung eines Rohstoff-Gases und in einem Verdampfer (3) erzeugten Dampfes;
(b) Unterbrechen der Zufuhr des Rohstoff-Gases zu dem Reformer (1) durch eine Vorrichtung (13) zur Zufuhr von Rohstoff-Gas und Unterbrechen der Zufuhr von Wasser zu dem Verdampfer (3) durch eine Vorrichtung (4) zur Zufuhr von Wasser;
(c) Zuführen des Rohstoff-Gases zu dem Reformer (1) durch die Vorrichtung (13) zur Zufuhr von Rohstoff-Gas in einem Zeitraum während des Verdampfens von Restwasser in dem Verdampfer (3) oder/und dem Reformer (1), nachdem die Zufuhr des Rohstoff-Gases zu dem Reformer (1) und die Zufuhr von Wasser zu dem Verdampfer (3) unterbrochen worden sind; sowie
(d) Erwärmen des Reformers (1) durch Verbrennen des von dem Reformer (1) abgegebenen Gases in einem Brenner, wenn das wasserstoffhaltige Gas in dem Reformer (1) erzeugt wird,
wobei der Schritt (c) einschließt, dass die Zufuhr des Rohstoff-Gases zu dem Reformer (1) durch die Vorrichtung (13) zur Zufuhr von Rohstoff-Gas ausgeführt wird (c1), wenn das von dem Reformer (1) zu dem Brenner abgegebene Gas nicht mehr brennbar ist, nachdem die Zufuhr des Rohstoff-Gases zu dem Reformer (1) und die Zufuhr von Wasser zu dem Verdampfer (3) unterbrochen worden sind, und
wobei in dem Schritt (c) wenigstens die Zufuhr des Rohstoff-Gases in einem Zustand durchgeführt wird, in dem der Reformer (1) eine Temperatur hat, die Dampfoxidation eines in dem Reformer (1) enthaltenen Reformier-Katalysators (1a) bewirkt.

2. Verfahren zum Betreiben einer Wasserstoff-Erzeugungsvorrichtung nach Anspruch 1, das des Weiteren den folgenden Schritt umfasst:
(e) Abdichten des Reformers (1) durch Schließen einer Abdichtungseinrichtung, nachdem die Zufuhr des Rohstoff-Gases zu dem Reformer (1) und die Zufuhr von Wasser zu dem Verdampfer (3) unterbrochen worden sind,
wobei der Schritt (c) einschließt, dass sowohl ein Prozess zur Druckreduzierung als auch ein Prozess zum Zuführen von Rohstoff-Gas ausgeführt werden (c2), wobei bei dem Prozess zur Druckreduzierung der Reformer (1) der Atmosphäre ausgesetzt wird, indem die Abdichtungseinrichtung geöffnet wird, wenn eine Erhöhung eines Innendrucks des Reformers (1) nach dem Schritt (e) zunimmt, und bei dem Prozess zum Zuführen von Rohstoff-Gas das Rohstoff-Gas dem Reformer (1) durch die Vorrichtung (13) zur Zufuhr von Rohstoff-Gas zugeführt wird.

3. Verfahren zum Betreiben einer Wasserstoff-Erzeugungsvorrichtung nach Anspruch 2, wobei in dem Schritt (c2) der Prozess zum Zuführen von Rohstoff-Gas und der Prozess zur Druckreduzierung gleichzeitig ausgeführt werden.

4. Verfahren zum Betreiben einer Wasserstoff-Erzeugungsvorrichtung nach Anspruch 2, wobei in dem Schritt (c2) der Prozess zum Zuführen von Rohstoff-Gas nach dem Prozess zur Druckreduzierung ausgeführt wird.

5. Verfahren zum Betreiben einer Wasserstoff-Erzeugungsvorrichtung nach Anspruch 2, das des Weiteren umfasst:
(f) Entfernen von Geruchsstoffen aus dem dem Reformer zuzuführenden Rohstoff-Gas.

## Revendications

1. Procédé d'exploitation d'un générateur d'hydrogène, comprenant des étapes consistant à :
(a) générer, dans un module de reformage (1), un gaz contenant de l'hydrogène par une réaction de reformage utilisant un gaz matière et de la vapeur générée dans un évaporateur (3) ;
(b) arrêter de fournir le gaz matière au module de reformage (1) par un dispositif de fourniture de gaz matière (13) et arrêter de fournir de l'eau à l'évaporateur (3) par un dispositif de fourniture d'eau (4) ;
(c) fournir le gaz matière au module de reformage (1) par le dispositif de fourniture de gaz matière (13) au cours d'une période pendant l'évaporation d'eau résiduelle dans l'un au moins de l'évaporateur (3) et du module de reformage (1), après que la fourniture de gaz matière au module de reformage (1) et la fourniture d'eau à l'évaporateur (3) ont été arrêtées ; et
(d) chauffer le module de reformage (1) par combustion, dans un module de combustion, du gaz envoyé depuis le module de reformage (1), pendant la génération du gaz contenant de l'hydrogène dans le module de reformage (1),
où l'étape (c) inclut (c1) l'exécution d'une fourniture du gaz matière au module de reformage (1) par le dispositif de fourniture de gaz matière (13) après que le gaz envoyé depuis le module de reformage (1) au module de combustion est devenu incombustible après que la fourniture du gaz matière au module de reformage (1) et la fourniture d'eau à l'évaporateur (3) ont été arrêtées, et
où, à l'étape (c), la fourniture du gaz matière au moins est effectuée dans un état dans lequel le module de reformage (1) est à une température qui entraîne une oxydation par la vapeur d'un catalyseur de reformage (1a) inclus dans le module de reformage (1).

2. Procédé d'exploitation d'un générateur d'hydrogène selon la revendication 1, comprenant en outre l'étape consistant à :
(e) fermer hermétiquement le module de reformage (1) en fermant un dispositif de fermeture hermétique après que la fourniture du gaz matière au module de reformage (1) et la fourniture d'eau à l'évaporateur (3) ont été arrêtées,
où l'étape (c) inclut (c2) l'exécution à la fois d'une opération de dépressurisation et d'une opération de fourniture de gaz matière, l'opération de dépressurisation étant telle que le module de reformage (1) est exposé à l'atmosphère par ouverture du dispositif de fermeture hermétique tandis qu'une élévation d'une pression interne du module de reformage (1) augmente après l'étape (e), l'opération de fourniture de gaz matière étant telle que le gaz matière est fourni au module de reformage (1) par le dispositif de fourniture de gaz matière (13).

3. Procédé d'exploitation d'un générateur d'hydrogène selon la revendication 2, où à l'étape (c2), l'opération de fourniture de gaz matière est exécutée en même temps que l'opération de dépressurisation.

4. Procédé d'exploitation d'un générateur d'hydrogène selon la revendication 2, ou à l'étape (c2), l'opération de fourniture de gaz matière est exécutée après l'opération de dépressurisation.

5. Procédé d'exploitation d'un générateur d'hydrogène selon la revendication 2, comprenant en outre :
(f) l'élimination de constituants odorants du gaz matière destiné à être fourni au module de reformage.
